Europäisches Patentamt

European Patent Office

Office européen des brevets

(19)

(11) Veröffentlichungsnummer : **0 054 912**
**B1**

(12) ## EUROPÄISCHE PATENTSCHRIFT

(45) Veröffentlichungstag der Patentschrift :
**25.03.87**

(51) Int. Cl.⁴ : **B 23 G    1/24**

(21) Anmeldenummer : **81110519.6**

(22) Anmeldetag : **17.12.81**

(54) **Vorrichtung, insbes. tragbare Vorrichtung, zum Bearbeiten von rohr und/oder stangenförmigen Werkstücken oder dergleichen.**

(30) Priorität : **24.12.80 DE 3049136**
**07.03.81 DE 3108692**

(43) Veröffentlichungstag der Anmeldung :
**30.06.82 Patentblatt 82/26**

(45) Bekanntmachung des Hinweises auf die Patenterteilung : **25.03.87 Patentblatt 87/13**

(84) Benannte Vertragsstaaten :
**AT CH DE LI**

(56) Entgegenhaltungen :
**DD-A-    44 269**
**DE-A- 2 308 814**
**DE-A- 2 520 350**
**US-A- 2 648 034**
**US-A- 3 801 876**

(73) Patentinhaber : **REMS-WERK Christian Föll und**
**Söhne GmbH & Co**
**Stuttgarter Strasse 83**
**D-7050 Waiblingen (DE)**

(72) Erfinder : **Wagner, Rudolf, Dr.-Ing.**
**Mannheimer Strasse 3**
**D-7000 Stuttgart 50 (DE)**

(74) Vertreter : **Jackisch, Walter, Dipl.-Ing.**
**Menzelstrasse 40**
**D-7000 Stuttgart 1 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung betrifft eine Vorrichtung, insbesondere eine tragbare Vorrichtung, nach dem Oberbegriff des Anspruches 1 bzw. des Anspruches 9.

Bei dieser bekannten Vorrichtung (DE-A-25 20 350) wird der Drehantrieb durch Betätigen des Fußhebels eingeschaltet, um die zu bearbeitenden Werkstücke um ihre Achse zu drehen. Der Fußhebel wird durch Federkraft jeweils in seine Ausstellung zurückgestellt, in der er den Drehantrieb selbsttätig abschaltet. Ist der Fußhebel beispielsweise defekt und kann er nicht mehr zurückgestellt werden, kann der Drehantrieb im Gefahrenfall nicht abgeschaltet werden. Auch kann es vorkommen, daß der Drehantrieb unbeabsichtigt wieder anläuft, wenn beispielsweise nach einem Netzausfall das Stromnetz wieder eingeschaltet wird. Zur Verringerung der Unfallgefahr ist das bei der Bearbeitung um seine Achse drehende Werkstück durch eine Abdeckhaube abgestützt. Sie ist umständlich in der Handhabung und aufwendig im Aufbau.

Bei Maschinen mit Schützsteuerung ist es bekannt, beispielsweise Schaltschütze mit Selbsthaltung zu installieren, die bei Netzausfall abfallen, so daß nach Einschalten des Stromnetzes die Maschine nicht wieder anläuft. Solche Schaltschütze haben jedoch verhältnismäßig große Abmessungen und sind daher insbesondere für tragbare Vorrichtungen nicht geeignet, bei denen für solche großen, zusätzlichen Teile kein Platz vorhanden ist. Der Einbau solcher Schaltschütze würde erhebliche Umbauten der Vorrichtung erfordern.

Der Erfindung liegt die Aufgabe zugrunde, die gattungsgemäße Vorrichtung ohne umfangreiche Abänderungen so auszubilden, daß sie im Gefahrenfall nicht zu einer Gefahrenquelle für die Bedienungsperson wird.

Diese Aufgabe wird bei der gattungsgemäßen Vorrichtung erfindungsgemäß mit den kennzeichnenden Merkmalen des Anspruches 1 bzw. des Anspruches 9 gelöst.

Wenn bei eingeschaltetem Drehantrieb der Strom ausfällt, wird der Drehantrieb abgeschaltet. Die Wiederanlaufsperre der erfindungsgemäßen Vorrichtung nach Anspruch 1 verhindert, daß nach Beseitigung der Betriebsstörung und Einschalten des Stromnetzes die Vorrichtung eingeschaltet wird. Die Bedienungsperson der erfindungsgemäßen Vorrichtung muß vielmehr zunächst die Wiederanlaufsperre betätigen, damit der Stromkreis der Schalteinrichtung geschlossen wird. Da die Wiederanlaufsperre am Fußtaster vorgesehen ist, braucht die Vorrichtung selbst nicht umgebaut zu werden. Darum können auch bereits im Einsatz sich befindende Vorrichtungen nachträglich mit solchen Wiederanlaufsperren ausgerüstet werden.

Bei der erfindungsgemäßen Vorrichtung gemäß Anspruch 9 kann im Notfall mit dem Bedienungselement die Notausschalteinrichtung betätigt werden, so daß die Vorrichtung vom Stromnetz getrennt ist und dadurch der Drehantrieb augenblicklich abgeschaltet wird. Selbst wenn jetzt über den Fußhebel die Schalteinrichtung der Vorrichtung betätigt wird, kann der Drehantrieb nicht eingeschaltet werden. Um die Vorrichtung wieder in Betrieb zu setzen, muß die Notausschalteinrichtung wieder eingeschaltet werden. Sie ist am Fußtaster vorgesehen, so daß ein Umbau des den Drehantrieb aufweisenden Vorrichtungsteiles nicht notwendig ist. Dadurch können bereits im Einsatz befindliche Vorrichtungen, die nicht mit einer Notausschalteinrichtung ausgerüstet sind, nachträglich sehr einfach mit einer solchen Notausschalteinrichtung versehen werden. Es muß dort lediglich das bei den Fußtastern vorhandene Verbindungskabel abgeklemmt und das Verbindungskabel des mit der Notausschalteinrichtung versehenen Fußtasters angeschlossen werden.

Weitere Merkmale der Erfindung ergeben sich aus den Ansprüchen, der Beschreibung und den Zeichnungen.

Die Erfindung wird anhand einiger in den Zeichnungen dargestellter Ausführungsbeispiele näher erläutert. Es zeigen

Figur 1 eine erfindungsgemäße Vorrichtung mit einem Fußtaster,

Figur 2 in perspektivischer und vergrößerter Darstellung den Fußtaster der erfindungsgemäßen Vorrichtung,

Figur 3 in schematischer Darstellung einen Längsschnitt durch einen Teil des Fußtasters gem. Fig. 2,

Figur 4 einen Querschnitt durch den Fußtaster im Bereich der Wiederanlaufsperre,

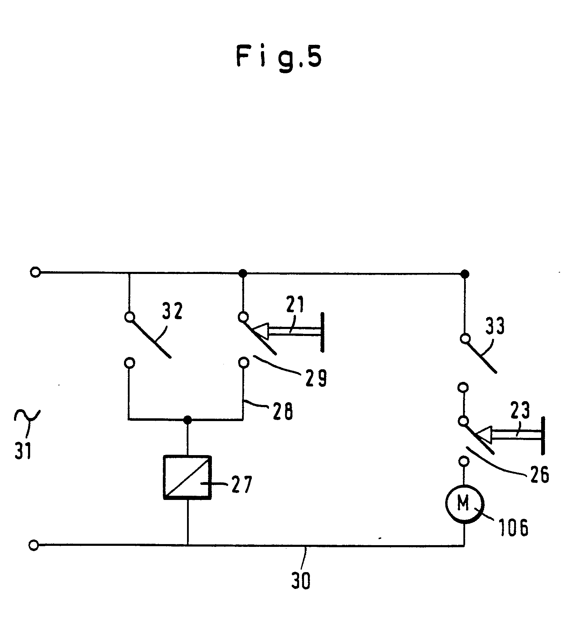

Figur 5 einen Schaltkreis der Schalteinrichtung und der Wiederanlaufsperre,

Figur 6 in perspektivisher Darstellung eine zweite Ausführungsform eines Fußtasters der erfindungsgemäßen Vorrichtung,

Figur 7 in schematischer Darstellung einen Längsschnitt durch einen Teil des Fußtasters gem. Fig. 6,

Figur 8 einen Querschnitt durch den Fußtaster gem. Fig. 6 im Bereich eines Aufnahmeraumes für die Notausschalteinrichtung,

Figur 9 einen Schaltkreis mit einer Notausschalteinrichtung, einer Wiederanlaufsperre und einer Schalteinrichtung für den Drehantrieb,

Figur 10 eine zweite Ausführungsform eines Schaltkreises mit einer Notausschalteinrichtung und einer Schalteinrichtung für den Drehantrieb.

Die Vorrichtung ist eine tragbare Außengewinde-Schneidmaschine für rohr- und/oder stangenförmige Werkstücke oder dgl.

Sie hat ein Maschinenbett 101, auf dem eine Spannvorrichtung 102 angeordnet ist, mit deren Spannbacken 103 das zu bearbeitende Werkstück festgespannt werden kann. Zum Spannen ist ide Spannvorrichtung mit einem drehbaren Spannhebel 104 versehen. Auf dem Maschinenbett 101 ist ferner ein Schneidkopf 105 axial verschiebbar gelagert, der durch einen Motor 106 drehbar angetrieben wird. Zur Axialverschiebung des Schneidkopfes 105 ist ein drehbarer Vorschubhebel 107 vorgesehen, mit dem der Schneidkopf auf zwei Führungen 108, 109 auf dem Maschinenbett 101 verschoben werden kann. Der Schneidkopf 105 ist in bekannter Weise mit radial zustellbaren Schneidbacken 110 versehen, mit denen ein Gewinde auf dem Werkstück geschnitten werden kann.

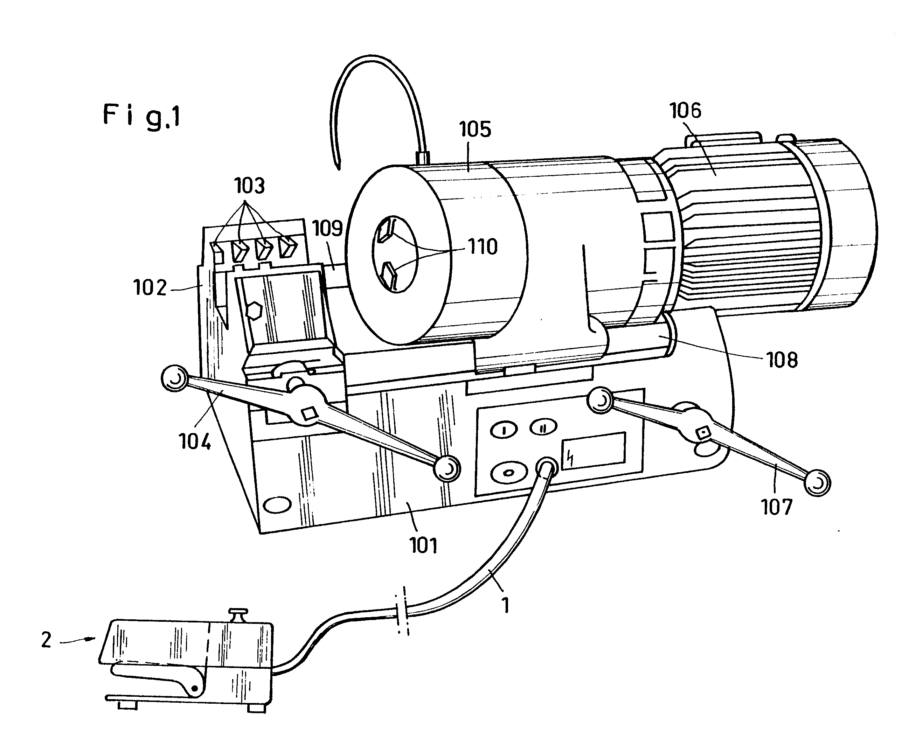

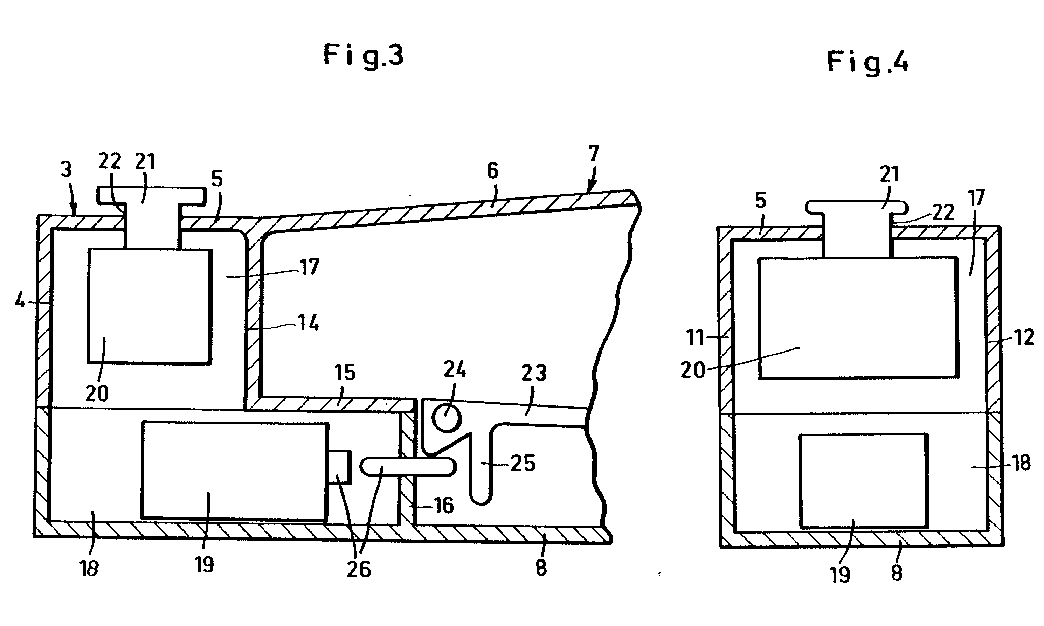

Die Gewindeschneidmaschine ist über ein Verbindungskabel 1 mit einem Fußtaster 2 elektrisch verbunden (Fig. 1). Der Fußtaster 2 hat ein Gehäuse 3, das sich über die ganze Höhe des Fußtasters erstreckt und vorzugsweise aus Kunststoffmaterial besteht. Das Gehäuse 3 hat eine über die gesamte Höhe des Fußtasters sich erstreckende Stirnwand 4, die quer zur Längsmittelebene des Fußtasters liegt. Am oberen Ende geht die Stirnwand 4 etwa rechtwinklig in eine obere Wand 5 des Gehäuses über, die sich in eine obere Wand 6 einer Haube 7 fortsetzt. Die obere Wand 5 hat rechteckigen Umriß, wobei die längeren Umrißseiten quer zur Längsmittelebene des Fußtasters 2 verlaufen. Die obere Wand 6 der Haube 7 verläuft vom Gehäuse 3 aus in Richtung auf ihr freies Ende leicht ansteigend, so daß die obere Wand 6 in Richtung auf ihr freies Ende zunehmenden Abstand von einem Bodenteil 8 des Fußtasters hat. Die Haube 7 ist im Querschnitt U-förmig ausgebildet und hat von der oberen Wand 6 aus divergierend angeordnete Schenkel 9, 10, die mit Abstand oberhalb des Bodenteils 8 enden. Ihre Höhe ist geringfügig größer als die größte halbe Höhe des Fußtasters. Die Schenkel 9, 10 gehen bogenförmig in die obere Wand 6 der Haube 7 über. Außerdem konvergieren die Schenkel 9, 10 von deren freien Enden aus in Richtung auf das Gehäuse 3 und gehen bogenförmig in Seitenwände 11, 12 des Gehäuses 3 über, die parallel zueinander und etwa senkrecht zur Stirnwand 4 liegen. Die Seitenwände 11, 12 schließen außerdem etwa rechtwinklig an den Bodenteil 8 an, der rechteckigen Umriß aufweist und an seiner Unterseite im Bereich der Ecken mit Füßen 13 versehen ist. Der Bodenteil 8 schließt mit der Stirnwand 4 und den Seitenwänden 11, 12 ab und erstreckt sich bis in Höhe des freien Endes der Haube 7. Der Stirnwand 4 liegt eine weitere Stirnwand 14 gegenüber (Fig. 3), die parallel zur Stirnwand 4 sowie rechtwinklig zur oberen Wand 5 des Gehäuses 3 liegt und sich über etwas mehr als die halbe Höhe des Fußtasters erstreckt. An das von der oberen Wand 5 abgewandte Ende der Stirnwand 14 schließt rechtwinklig eine obere Wand 15 an, die sich von der Stirnwand 14 aus in Richtung auf das freie Ende der Haube 7 erstreckt und annähernd parallel zum Bodenteil 8 verläuft. Die obere Wand 15 ist über eine rechtwinklig an diese anschließende Abschlußwand 16 mit dem Bodenteil 8 verbunden. Der Abstand zwischen den beiden Stirnwänden 4 und 14 entspricht etwa 1/3 bis 1/4 der Länge des Fußtasters 2. Die in Längsrichtung des Fußtasters 2 gemessene Länge der oberen Wand 15 entspricht ebenfalls etwa 1/3 bis 1/4 der Gesamtlänge des Fußtasters. Die Höhe der Abschlußwand 16 ist geringfügig kleiner als die an dieser Stelle gemessene Länge des Fußtasters 2. Die Stirnwand 14, die obere Wand 15 und die Abschlußwand 16 verbinden die einander gegenüberliegenden Seitenwände 11 und 12, so daß eine hohe Formsteifigkeit erreicht wird.

Das Gehäuse 3 wird von den Stirnwänden 4 und 14, den oberen Wänden 5 und 15, den Seitenwänden 11, 12, einem Abschnitt des Bodenteiles 8 und der Abschlußwand 16 begrenzt. Die Stirnwand 14 bildet außerdem eine Abschlußwand der Haube 7. Infolge der beschriebenen Ausbildung des Gehäuses 3 werden zwei übereinanderliegende Aufnahmeräume 17, 18 gebildet, die sich jeweils über die ganze Breite des Fußtasters erstrecken. Der obere Aufnahmeraum 17 ist in Längsrichtung des Fußtasters nur etwa halb so lang wie der untere Aufnahmeraum 18, dessen Höhe jedoch geringfügig kleiner ist als die Höhe des oberen Aufnahmeraumes und der sich bis in den Bereich der Haube 7 erstreckt. Durch diese Gehäuseaufteilung wird eine sehr kompakte Ausbildung des Fußtasters erreicht.

Im unteren Aufnahmeraum 18 ist eine Schalteinrichtung 19 untergebracht, die mit dem Verbindungskabel 1 verbunden ist. Im oberen Aufnahmeraum 17 ist eine Wiederanlaufsperre 20 angeordnet, die mit einem Auslöseknopf 21 versehen ist, der durch eine Öffnung 22 in der oberen Wand 5 des Gehäuses 3 nach außen ragt. Der Auslöseknopf 21 kann gegen Federkraft gedrückt werden. Die Stirnwand 4 weist im Bereich des unteren Aufnahmeraumes 18 eine Öffnung für das Verbindungskabel 1 auf.

Zum Betätigen der Schalteinrichtung 19 ist im Bereich unterhalb der Haube 7 ein Fußhebel 23 auf einem Lagerbolzen 24 gegen Federkraft verschwenkbar gelagert. Der Fußhebel ist plattenförmig ausgebildet und weist an seiner Unterseite einen Ansatz 25 auf, der beim Niederdrücken des Fußhebels 23 gegen Federkraft einen Schalter 26 der Schalteinrichtung 19 betätigt. Die U-förmige Ausbildung der Haube 7 und die konvergierend angeordneten Schenkel 9, 10 der Haube stellen sicher, daß die Bedienungsperson bequem ihren Fuß unter die Haube 7 auf den Fußhebel 23 setzen und diesen betätigen kann.

Die Haube 7, die Stirnwand 14, die oberen Wände 5 und 15 sowie die oberen Abschnitte der Stirnwand 4 und der Seitenwände 11, 12 sind einstückig ausgebildet und lösbar mit dem unteren Teil des Fußtasters verbunden. Die oberen Abschnitte der Stirnwand 4 und der Seitenwände 11, 12 haben gleiche Höhe wie die Stirnwand 14. Der untere Teil des Fußtasters wird durch den Bodenteil 8, die Abschlußwand 16 und die unteren Abschnitte der Stirnwand 4 und der Seitenwände 11, 12 gebildet. Dabei schließen in montierter Lage die unteren Abschnitte der Stirnwand 4 und der Seitenwände 11, 12 mit ihren Stirnflächen an die Stirnflächen der oberen Abschnitte der Stirnwand und der Seitenwände an. Die obere Wand 15 liegt auf der Stirnseite der Abschlußwand 16 auf und stützt diese ab (Fig. 3). Infolge der zweiteiligen Ausbildung und lösbaren Verbindung der beiden Teile kann der Fußtaster zu Reparaturzwecken leicht geöffnet werden.

Die Wiederanlaufsperre hat ein Relais 27 mit einem Selbsthaltekreis 28, in dem ein durch den Auslöseknopf 21 betätigbarer Schalter 29 liegt. Der Schalter 26 der Schalteinrichtung 19 liegt in einem Schaltkreis 30, der an eine Stromquelle 31 angeschlossen ist.

Um die mit dem Fußtaster 2 ausgerüstete Vorrichtung betätigen zu können, wird zunächst der Auslöseknopf 21 der Wiederanlaufsperre 20 gegen Federkraft gedrückt, wobei der Schalter 29 im Selbsthaltekreis 28 geschlossen wird. Dadurch werden das Relais 27 erregt und Schließer 32, 33 geschlossen. Der Schalter 29 bleibt bei erregtem Relais 27 geschlossen. Zum Antrieb des Motors 106 wird dann der Schalter 26 betätigt, wodurch der Schaltkreis 30 geschlossen und der Motor 106 eingeschaltet wird.

Bei einem Netzausfall fällt das Relais 27 ab, so daß die Schließer 32, 33 und der Schalter 29 geöffnet werden, wobei der Auslöseknopf 21 unter Federkraft in seine Ausgangslage verstellt wird. Wenn die Störung behoben ist und der Strom wieder fließt, sind der Selbsthaltekreis 28 und der Schaltkreis 30 wegen der geöffneten Schließer 32, 33 offen, so daß bei geschlossenem Schalter 26 der Motor 106 nicht eingeschaltet wird. Erst durch Drücken des Auslöseknopfes 21 werden das Relais 27 erregt und die Schließer 32, 33 wieder geschlossen, so daß dann auch der Schaltkreis 30 geschlossen und der Motor eingeschaltet werden.

Beim dargestellten Ausführungsbeispiel ist der Fußhebel mit dem Schalter 26 ein Ein- und Ausschalter, d. h. der Schalter 26 bleibt nach einmaligem Niedertreten des Fußhebels 23 geschlossen. Zum Öffnen des Schalters 26 muß der Fußhebel dann erneut niedergedrückt werden.

Der Fußhebel kann aber auch als Tippschalter ausgebildet sein, der bei Niederdrücken den Schalter 26 schließt und bei Loslassen den Schalter wieder öffnet. Bei einer solchen Ausbildung ist der Schließer 33 nicht unbedingt erforderlich. In diesem Fall wird der Schaltkreis 30 erst dann geschlossen, wenn der Fußhebel 23 gedrückt wird. Zur zusätzlichen Sicherung kann aber auch in einem solchen Fall der Schließer 33 vorgesehen sein, so daß auf jeden Fall nach einem Netzausfall der Schaltkreis 30 erst dann wieder geschlossen werden kann, wenn zuvor die Wiederanlaufsperre 20 betätigt worden ist.

Die Wiederanlaufsperre 20 läßt sich im Gehäuse 3 des Fußtasters 2 einfach unterbringen und mit der Schalteinrichtung 19 verdrahten. Die Unterbringung im Fußtaster hat darüber hinaus den großen Vorteil, daß die für den Einbau elektrischer Schaltgeräte vorgeschriebene Schutzart auf einfache Weise erfüllt werden kann. Außerdem sind keine Änderungen der Vorrichtung selbst notwendig, da die Wiederanlaufsperre 20 im Fußtaster untergebracht ist. Außerdem können bereits im Einsatz befindliche Vorrichtungen sehr einfach mit der Wiederanlaufsperre nachgerüstet werden. Es muß hierzu lediglich das bei diesen Fußtastern bereits vorhandene Verbindungskabel abgeklemmt werden, was in der Regel auch von einem Nichtelektriker durchgeführt werden kann. Dann wird das Verbindungskabel 1 angeschlossen, in dem fertig installiert und verdrahtet der Fußtaster und die in diesem integrierte und verschaltete Wiederanlaufsperre eingefügt sind.

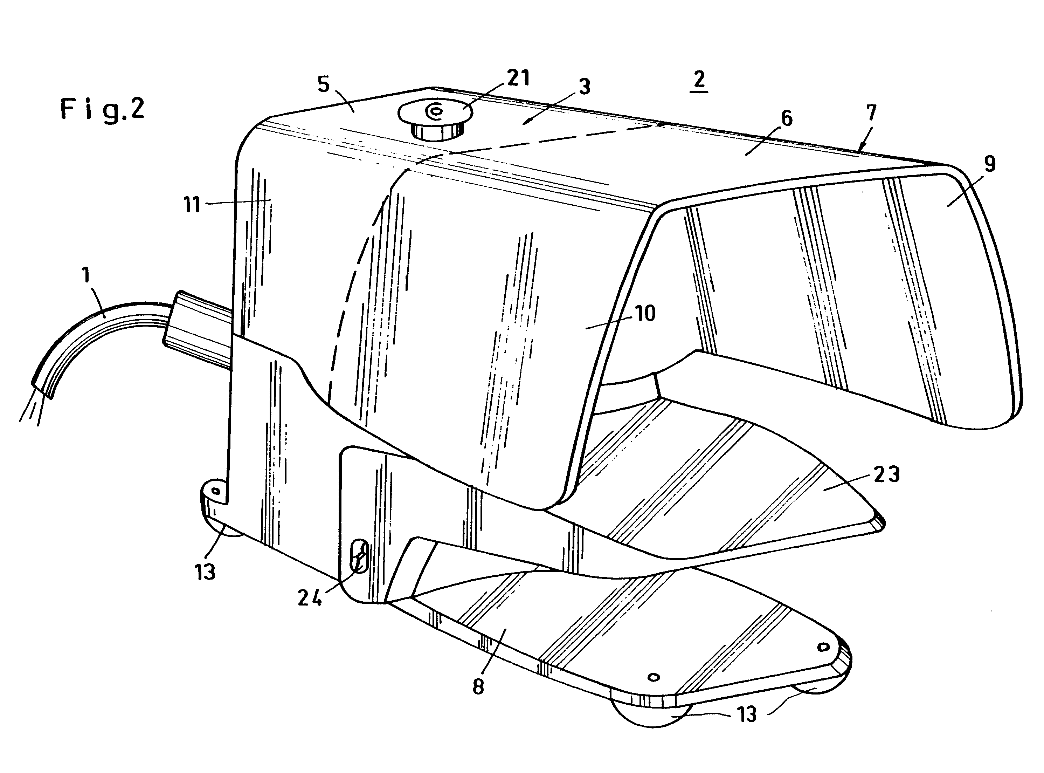

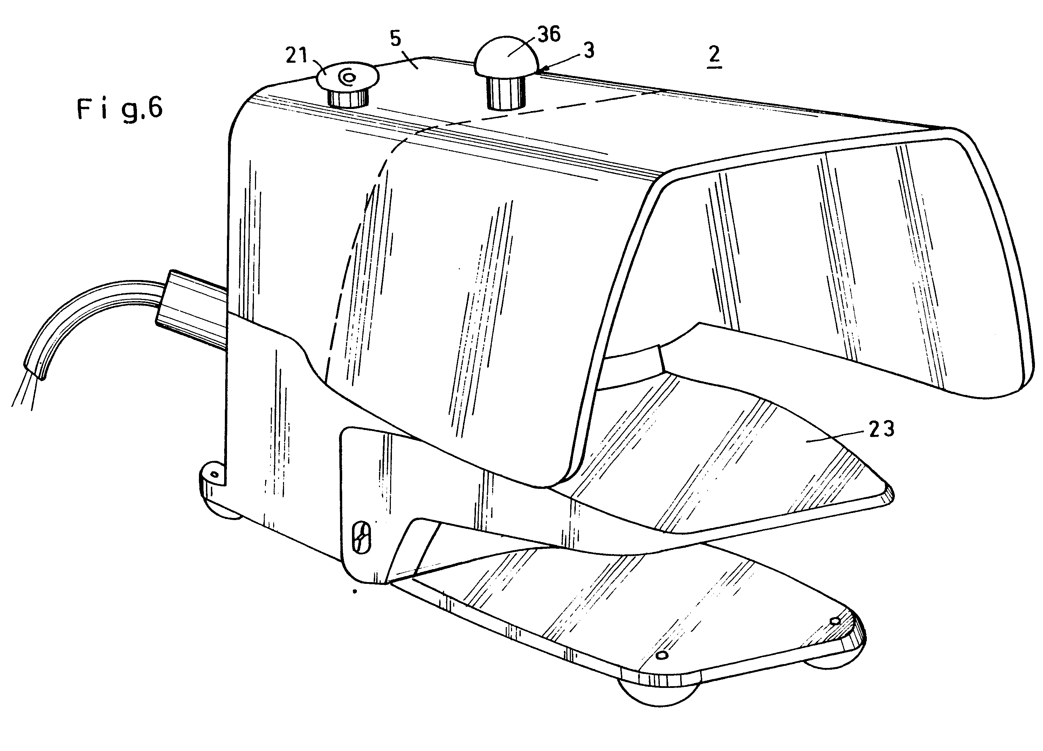

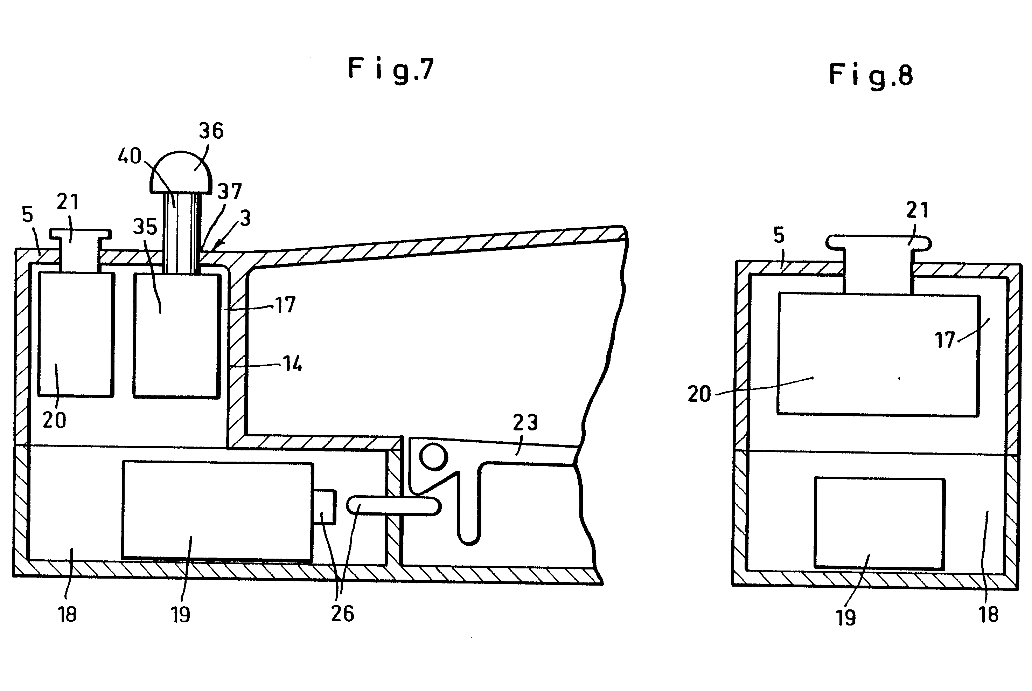

Die in den Fig. 6 bis 8 dargestellte Ausführungsform eines Fußtasters ist gleich ausgebildet wie die Ausführungsform nach den Fig. 2 bis 4. Im oberen Aufnahmeraum 17 ist jedoch außer der Wiederanlaufsperre 20 noch eine Notausschalteinrichtung 35 angeordnet, die mit einem Bedienungselement 36 versehen ist. Das Bedienungselement 36 ragt ebenfalls durch eine Öffnung 37 in der oberen Wand 5 des Gehäuses 3 nach außen. Gem. Fig. 6 liegen der Auslöseknopf 21 und das Bedienungselement 36 in der oberen Wand 5 des Gehäuses 3 diagonal einander gegenüber, wodurch sich eine raumsparende Anordnung ergibt. Der Auslöseknopf 21 und das Bedienungselement 36 können gegen Federkraft gedrückt werden.

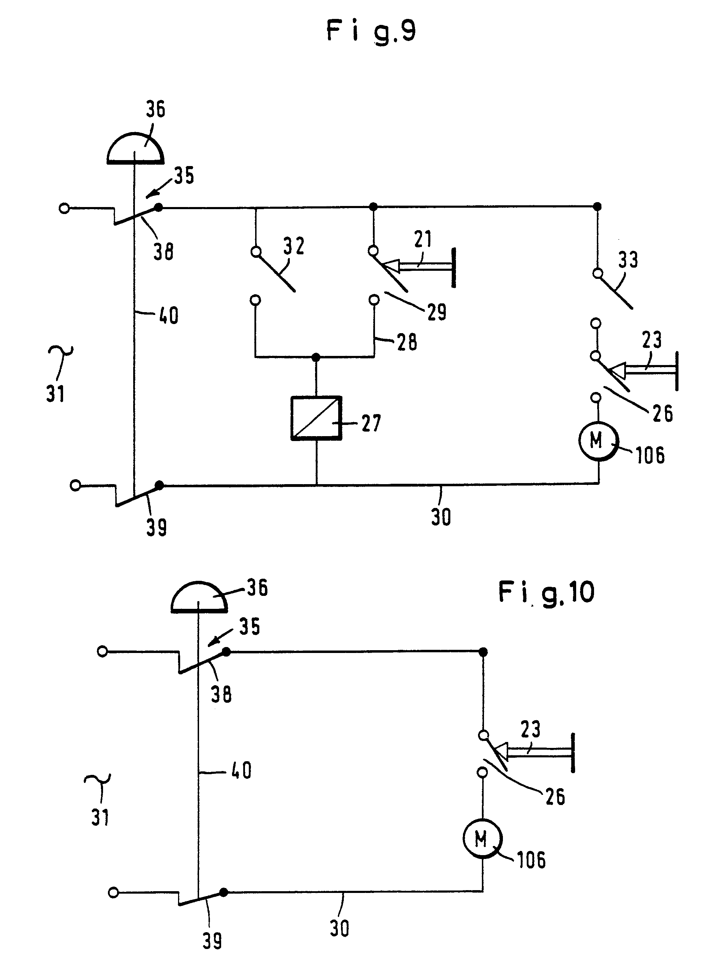

Wie Fig. 9 zeigt, liegt im Stromkreis 30 der Wiederanlaufsperre 20 die Notausschalteinrichtung 35, die zwei Schalter 38, 39 aufweist, die durch einen mit dem Bedienungselement 36 verbundenen Stößel 40 gemeinsam zu betätigen sind.

Um die mit dem Fußtaster 2 ausgerüstete Vorrichtung betätigen zu können, wird zunächst der Auslöseknopf 21 der Wiederanlaufsperre 20 gegen Federkraft gedrückt, wobei der Schalter 29 im Selbsthaltekreis 28 geschlossen wird. Dadurch werden das Relais 27 erregt und die Schließer 32, 33 geschlossen. Der Schalter 29 bleibt bei erregtem Relais 27 geschlossen. Die Schalter 38, 39 der Notausschalteinrichtung 35 sind ebenfalls geschlossen. Zum Antrieb des Motors 106 der Vorrichtung wird der Schalter 26 durch Verschwenken des Fußhebels 23 betätigt, wodurch der Schaltkreis 30 geschlossen und der Motor eingeschaltet wird.

Damit im Gefahrenfalle, wenn sich beispielsweise bei einer Gewindeschneidmaschine die Kleidung der Bedienungsperson in der Maschine verfängt, die Vorrichtung augenblicklich vom Stromnetz getrennt werden kann, wird der Stößel 40 über das Bedienungselement 36 gedrückt, wodurch die Schalter 38, 39 geöffnet werden. Dadurch ist der Stromkreis 30 unterbrochen, so daß der Motor 106 sofort abgeschaltet wird. Mit dem Drücken des Bedienungselementes 36 fällt auch das Relais 27 ab, so daß die Schließer 32, 33 und der Schalter 29 geöffnet werden, wobei der Auslöseknopf 21 unter Federkraft in seine Ausgangslage verstellt wird. Wenn der Gefahrenfall behoben ist, muß die Notausschalteinrichtung 35 wieder eingeschaltet werden. Hierzu kann der Stößel 40 mit dem Bedienungselement 36 als mechanischer Schalter ausgebildet sein, der in der eingedrückten Lage unter Federkraft und in der herausgezogenen Lage durch Klemmkraft gehalten wird. Wenn der Stößel 40 herausgezogen wird, werden die Schalter 38, 39 geschlossen. Vorzugsweise ist die Notausschalteinrichtung 35 jedoch so ausgebildet, daß der Stößel 40 nach dem Eindrücken in der eingedrückten Lage verbleibt, so daß die Schalter 38, 39 mittels des Stößels 40 nicht mehr geschlossen werden können. Die Schalter 38, 39 sind mit einer (nicht dargestellten) Sicherungseinrichtung elektrisch verbunden, die bei Drücken des Stößels 40 ausgeschaltet wird. Zum Einschalten der Notausschalteinrichtung 35 muß diese Sicherungseinrichtung, die an der Vorrichtung selbst oder an einer vom Aufstellplatz der Vorrichtung entfernten Stelle angeordnet sein kann, wieder eingeschaltet werden, wodurch die Schalter 38, 39 geschlossen und der Stößel 40 in seine Ausgangslage zurückgeführt wird. Dann kann wieder Strom in den Schaltkreis 30 fließen. Der Selbsthaltekreis 28 und der Schaltkreis 30 sind wegen der geöffneten Schließer 32, 33 offen, so daß bei geschlossenem Schalter 26 der Motor 106 noch nicht eingeschaltet wird. Erst durch Drücken des Auslöseknopfes 21 werden das Relais 27 erregt und die Schließer 32, 33 wieder geschlossen, so daß dann auch der Schaltkreis 30 geschlossen und der Motor eingeschaltet werden kann.

Die Wiederanlaufsperre 20 stellt unabhängig vom Betätigen der Notausschalteinrichtung 35 sicher, daß nach einem Stromausfall und Behebung der Störung die Vorrichtung eingeschaltet wird. Bei einem Netzausfall fällt nämlich das Relais 27 ab, wodurch die Schließer 32, 33 und der Schalter 29 in der oben beschriebenen Weise geöffnet werden. Hierbei sind die Schalter 38, 39 geschlossen. Ist die Störung behoben und fließt wieder Strom, kann der Motor 106 erst wieder eingeschaltet werden, wenn zuvor der Auslöseknopf 21 gedrückt und dadurch das Relais 27 erregt und die Schließer 32, 33 wieder geschlossen werden.

Bei einer weiteren Ausführungsform ist im Aufnahmeraum 17 des Gehäuses 3 nur die Notausschalteinrichtung 35 untergebracht, mit der die Vorrichtung im Gefahrenfalle vom Stromnetz getrennt werden kann. Wie Fig. 10 zeigt, liegen im Stromkreis 30 die beiden Schalter 38, 39 der Notausschalteinrichtung 35 sowie der Schalter 26, der mit dem Fußhebel 23 betätigt werden kann.

Auch bei dieser Ausführungsform wird durch Drücken des Stößels 40 mittels des Bedienungselementes 36 der Schaltkreis 30 durch Öffnen der Schalter 38, 39 geöffnet, so daß der Motor 106 abgeschaltet wird. Zum Einschalten der Vorrichtung müssen die Schalter 38, 39 der Notausschalteinrichtung 35 wieder in der oben beschriebenen Weise geschlossen werden. Im Gegensatz zur vorigen Ausführungsform kann jetzt über den Fußhebel 23 der Schalter 26 und damit der Schaltkreis 30 geschlossen werden, so daß der Motor eingeschaltet wird.

Der Fußhebel 23 mit dem Schalter 26 ist in beiden zuvor beschriebenen Ausführungsformen ein Ein- und Ausschalter, so daß der Schalter 26 nach einmaligem Niedertreten des Fußhebels geschlossen bleibt. Zum Öffnen des Schalters 26 muß der Fußhebel dann erneut gedrückt werden.

Der Fußhebel kann aber auch als Tippschalter ausgebildet sein, der bei Niederdrücken den Schalter 26 schließt und ihn bei Loslassen wieder öffnet. Bei einer solchen Ausbildung ist bei der Ausführungsform nach den Fig. 6 bis 9 der Schließer 33 nicht unbedingt erforderlich. In diesem Fall wird der Schaltkreis 30 erst dann geschlossen, wenn der Fußhebel 23 gedrückt wird. Zur zusätzlichen Sicherung kann aber auch in einem solchen Fall der Schließer 33 vorgesehen sein, so daß auf jeden Fall nach einem Netzausfall der Schaltkreis 30 erst dann wieder geschlossen werden kann, wenn zuvor die Wiederanlaufsperre 20 betätigt worden ist.

Die Wiederanlaufsperre und/oder die Notausschalteinrichtung 35 lassen sich im Gehäuse 3 des Fußtasters 2 einfach unterbringen und mit der Schalteinrichtung 19 verdrahten. Die Unterbringung im Fußtaster hat den Vorteil, daß die für den Einbau elektrischer Schaltgeräte vorgeschriebene Schutzart auf einfache Weise erfüllt werden kann. An der Vorrichtung selbst sind keine Änderungen notwendig, da die Wiederanlaufsperre 20 und/oder die Notausschalteinrichtung 35 im Fußtaster untergebracht sind. Dadurch können bereits im Einsatz befindliche Vorrichtungen sehr einfach mit einer solchen Wiederanlaufsperre und/oder einer solchen Notausschaltvorrichtung nachgerüstet werden. Es muß hierzu lediglich das bei diesen Fußtastern bereits vorhandene Verbindungskabel abgeklemmt werden, was in der Regel auch von einem Nichtelektriker durchgeführt werden kann. Dann wird das Verbindungskabel 1 angeschlossen, in dem fertig installiert und verdrahtet der Fußtaster und die in diesem integrierte und verschaltete Wiederanlaufsperre und/oder Notausschalteinrichtung eingefügt sind. Mit den Ausführungsformen nach den Fig. 6 bis 10 kann die Vorrichtung zusätzlich oder auch unabhängig vom Vorhandensein einer Wiederanlaufsperre im Gefahrenfall augenblicklich vom Stromnetz getrennt werden.

Anstelle einer Gewindeschneidmaschine können auch andere tragbare Vorrichtungen zum Bearbeiten von rohr- und/oder stangenförmigen Werkstücken oder dgl. oder auch Elektrowerkzeuge mit einem Fußtaster in der oben beschriebenen Weise ausgerüstet sein.

## Patentansprüche

1. Vorrichtung, insbes. tragbare Vorrichtung, zum Bearbeiten von rohr- und/oder stangenförmigen Werkstücken oder dgl., wie Gewindeschneidmaschine, mit einem Drehantrieb und mit einer Schalteinrichtung (19) für den Drehantrieb, die in einem Fußtaster (2) untergebracht ist, der einen zum Betätigen der Schalteinrichtung vorgesehenen Fußhebel aufweist, dadurch gekennzeichnet, daß der Fußtaster (2) mit einer Wiederanlaufsperre (20) gegen unbeabsichtigten Wiederanlauf nach Netzausfall versehen ist.

2. Vorrichtung nach Anspruch 1, dadurch gekennzeichnet, daß die Wiederanlaufsperre (20) im Fußtaster (2) untergebracht ist.

3. Vorrichtung nach Anspruch 1 oder 2, dadurch gekennzeichnet, daß die Wiederanlaufsperre (20) und die Schalteinrichtung (19) in einem gemeinsamen Gehäuse (3) untergebracht sind, wobei die Wiederanlaufsperre (20) vorzugsweise im Bereich oberhalb der Schalteinrichtung (19) angeordnet ist.

4. Vorrichtung nach einem der Ansprüche 1 bis 3, dadurch gekennzeichnet, daß die Wiederanlaufsperre (20) und die Schalteinrichtung (19) ion getrennten Aufnahmeräumen (17, 18) untergebracht sind, die vorzugweise ineinander übergehen, und daß vorzugsweise der untere Aufnahmeraum (18) in Längsrichtung des Fußtasters (2) über den oberen Aufnahmeraum (17) ragt.

5. Vorrichtung nach einem der Ansprüche 1 bis 4, dadurch gekennzeichnet, daß die Wiederanlaufsperre (20) durch eine Stirnwand (14) des Gehäuses (3) vom Fußhebel (23) getrennt ist, die vorzugsweise den oberen Aufnahmeraum (17) vom Fußhebel (23) trennt und etwa in halber Länge des unteren Aufnahmeraumes (18) vorgesehen ist und sich von einer oberen Wand (5) des Gehäuses (3) aus erstreckt sowie mit Abstand von einem Bodenteil (8) des Fußtasters (2) endet.

6. Vorrichtung nach einem der Ansprüche 1 bis 5, dadurch gekennzeichnet, daß die Wiederanlaufsperre (20) einen gegen Federkraft verschiebbaren Auslöseknopf (21) zum Einschalten der Wiederanlaufsperre aufweist, der durch das Gehäuse (3) nach außen ragt.

7. Vorrichtung nach einem der Ansprüche 5 oder 6, dadurch gekennzeichnet, daß an die Stirnwand (14) eine in Längsrichtung des Fußtasters (2) sich erstreckende und den unteren Aufnahmeraum (18) teilweise nach oben abschließende obere Wand (15) anschließt, die vorzugsweise im Bereich außerhalb des oberen Aufnahmeraumes (17) liegt und insbesondere durch eine Abschlußwand (16) mit dem Bodenteil (8) verbunden ist.

8. Vorrichtung nach einem der Ansprüche 1 bis 7, dadurch gekennzeichnet, daß die Wiederanlaufsperre (20) ein Relais (27) mit einem Selbsthaltekreis (28) aufweist, der im Schaltkreis (30) der Schalteinrichtung (19) liegt.

9. Vorrichtung, insbesondere tragbare Vorrichtung, zum Bearbeiten von rohr- und/oder stangenförmigen Werkstücken oder dergleichen, wie Gewindeschneidmaschinen, mit einem Drehantrieb und mit einer Schalteinrichtung (19) für den Drehantrieb, die in einem Fußtaster (2) untergebracht ist, der einen zum Betätigen der Schalteinrichtung vorgesehenen Fußhebel (23) aufweist, dadurch gekennzeichnet, daß der Fußtaster (2) mit einer an sich bekannten Notausschalteinrichtung (35) versehen ist, die mit dem Drehantrieb (106) leitungsverbunden ist und ein Bedienungselement (36) aufweist, das zur Betätigung durch die Bedienungsperson im Bereich neben dem Fußhebel (23) angeordnet ist.

10. Vorrichtung nach Anspruch 9, dadurch gekennzeichnet, daß die Notausschalteinrichtung (35) im Fußtaster (2) untergebracht ist, und daß das Bedienungselement (36) von außen betätigbar ist.

11. Vorrichtung nach Anspruch 9 oder 10, dadurch gekennzeichnet, daß die Notausschalteinrichtung (35) und die Schalteinrichtung (19) in einem gemeinsamen Gehäuse (3) untergebracht sind, wobei vorzugsweise die Notausschalteinrichtung (35) im Bereich oberhalb der Schalteinrichtung (19) angeordnet ist.

12. Vorrichtung nach einem der Ansprüche 9 bis 11, dadurch gekennzeichnet, daß die Notausschalteinrichtung (35) durch eine Gehäusewand (14) vom Fußhebel (23) getrennt ist.

13. Vorrichtung nach einem der Ansprüche 9 bis 12, dadurch gekennzeichnet, daß die Notausschalteinrichtung (35) und die Schalteinrichtung (19) in getrennten Aufnahmeräumen (17, 18) des Gehäuses (3) liegen.

14. Vorrichtung nach einem der Ansprüche 1 bis 13, dadurch gekennzeichnet, daß die Notausschalteinrichtung (35) und die Wiederanlaufsperre (20) in einem gemeinsamen Aufnahmeraum (17) des Gehäuses (3) untergebracht sind.

**Claims**

1. Device, particularly portable device, for the machining of tube- and/or rod-shaped workpieces or similar, such as thread-cutting machine, with a rotary drive and with a switching apparatus (19) for the rotary drive, said switching apparatus (19) being accommodated in a footswitch (2), said footswitch (2) comprising a pedal provided for the actuation of the switching apparatus, characterized in that the footswitch (2) is provided with a restart inhibit (20) to prevent unintentional restarting after a power failure.

2. Device according to claim 1, characterized in that the restart inhibit (20) is accommodated in the footswitch (2).

3. Device according to claim 1 or 2, characterized in that the restart inhibit (20) and the switching apparatus (19) are accommodated in a common housing (3), the restart inhibit (20) being disposed preferably in the region above the switching apparatus (19).

4. Device accordidng to any one of claims 1 to 3, characterized in that the restart inhibit (20) and the switching apparatus (19) are accommodated in separate mounting spaces (17, 18), said mounting spaces (17, 18) preferably merging into one another, and in that preferably the lower mounting space (18) projects beyond the upper mounting space (17) in the longitudinal direction of the footswitch (2).

5. Device according to any one of claims 1 to 4, characterized in that the restart inhibit (20) is separated from the pedal (23) by a front wall (14) of the housing (3), said front wall (14) preferably separating the upper mounting space (17) from the pedal (23) and being provided at approximately half-way along the lower mounting space (18) and extending from an upper wall (5) of the housing (3) as well as terminating at a distance from a bottom part (8) of the footswitch (2).

6. Device according to any one of claims 1 to 5, characterized in that, for switching on the restart inhibit, said restart inhibit (20) comprises a trigger button (21), said trigger button (21) being displaceable against spring force and projecting outwards through the housing (3).

7. Device according to any one of claims 5 or 6, characterized in that the front wall (14) is adjoined by an aupper wall (15) extending in the longitudinal direction of the footswitch (2) and partially closing off the lower mounting space (18) at the top, said upper wall (15) being situated preferably in the region outside the upper mounting space (17) and being connected, particularly by a closing wall (16), to the bottom part (8).

8. Device according to any one of claims 1 to 7, characterized in that the restart inhibit (20) comprises a relay (27) with a self-holding circuit (28), said self-holding circuit (28) being situated in the switching circuit (30) of the switching apparatus (19).

9. Device, particularly portable device, for the machining of tube- and/or rod-shaped workpieces or similar, such as thread-cutting machines, with a rotary drive and with a switching apparatus (19) for the rotary drive, said switching apparatus being accommodated in a footswitch (2), said footswitch (2) comprising a pedal (23) provided for the actuation of the switching apparatus, characterized in that the footswitch (2) is provided with a known emergency-stop device (35), said emergency-stop device (35) being line-connected to the rotary drive (106) and comprising a control (36), said control (36) being disposed in the region near the pedal (23) for actuation by the operator.

10. Device according to claim 9, characterized in that the emergency-stop device (35) is accommodated in the footswitch (2) and in that the control (36) is adapted to be actuated externally.

11. Device according to claim 9 or 10, characterized in that the emergency-stop device (35) and the switching apparatus (19) are accommodated in a common housing (3), preferably the emergency-stop device (35) being disposed in the region above the switching apparatus (19).

12. Device according to any one of claims 9 to 11, characterized in that the emergency-stop device (35) is separated from the pedal (23) by a housing wall (14).

13. Device according to any one of claims 9 to 12, characterized in that the emergency-stop device (35) and the switching apparatus (19) are situated in separate mounting spaces (17, 18) of the housing (3).

14. Device according to any one of claims 1 to 13, characterized in that the emergency-stop device (35) and the restart inhibit (20) are accommodated in a common mounting space (17) of the housing (3).

**Revendications**

1. Dispositif, en particulier dispositif portatif, destiné à l'usinage de pièces tubulaires et/ou en barre ou équivalentes, tel qu'une machine à fileter, comportant un vireur et un mécanisme de commutation (19) du vireur, logé dans une commande au pied (2) qui présente une pédale permettant d'actionner le mécanisme de commutation, caractérisé par le fait que la commande au pied (2) est équipée d'un système de blocage de la remise en marche (20), empêchant une remise en marche involontaire après une panne de secteur.

2. Dispositif suivant la revendication 1, caractérisé par le fait que le système de blocage de la remise en marche (20) est logé dans la commande au pied (2).

3. Dispositif selon la revendication 1 ou 2, caractérisé par le fait que le système de blocage de la remise en marche (20) et le mécanisme de commutation (19) sont logés dans un boîtier commun (3), le système de blocage de la remise en marche (20) étant placé, de préférence, au-dessus du mécanisme de commutation (19).

4. Dispositif selon l'une des revendications 1 à 3, caractérisé, d'une part, par le fait que le système de blocage de la remise en marche (20) et le mécanisme de commutation (19) sont logés dans des compartiments séparés (17, 18) qui sont superposés, de préférence, et, d'autre part, par le fait que le compartiment inférieur (18), de préférence, dépasse du compartiment supérieur (17) dans le sens longitudinal de la commande au pied (2).

5. Dispositif selon l'une des revendications 1 à 4, caractérisé par le fait que le système de blocage de la remise en marche (20) est séparé de la pédale (23) par une paroi frontale (14) du boîtier (3) qui sépare, de préférence, le compartiment supérieur (17) de la pédale (23), dont la longueur correspond à la moitié de celle du compartiment inférieur (18) et qui s'étend à partir d'une paroi supérieure (5) du boîtier (3) et se termine à une certaine distance de la base (8) de la commande au pied (2).

6. Dispositif selon l'une des revendications 1 à 5, caractérisé par le fait que le système de blocage de la remise en marche (20) présente un bouton de déclenchement (21), actionnable en comprimant un ressort, permettant de mettre en circuit système de blocage de la remise en marche et qui sort vers l'extérieur à travers le boîtier (3).

7. Dispositif selon l'une des revendications 5 ou 6, caractérisé par le fait qu'une paroi supérieure (15), s'étendant dans le sens longitudinal de la commande au pied (2) et fermant, partiellement, la partie supérieure du compartiment inférieur (18), qui, de préférence, se trouve au dehors du compartiment supérieur (17) et est reliée à la base (8), notamment par une paroi de fermeture (16), est raccordée à la paroi frontale (14).

8. Dispositif selon l'une des revendications 1 à 7, caractérisé par le fait que le système de blocage de la remise en marche (20) présente un relais (27) comportant un circuit d'automaintien (28) qui se trouve dans le circuit de commutation (30) du mécanisme de commutation (19).

9. Dispositif, en particulier dispositif portatif, destiné à l'usinage de pièces tubulaires et/ou en barre ou équivalentes, tel qu'une machine à fileter, comportant un vireur et un mécanisme de commutation (19) du vireur, logé dans une commande au pied (2) qui présente une pédale (23) permettant d'actionner le dispositif de commutation, caractérisé par le fait que la commande au pied (2) est équipée d'un dispositif d'arrêt d'urgence (35), de conception connue, dont les circuits sont reliés à ceux du vireur (106) et qui présente un élément de commande (36), placé à proximité de la pédale (23) afin d'être actionné par l'opérateur.

10. Dispositif selon la revendication 9, caractérisé, d'une part, par le fait que le dispositif d'arrêt d'urgence (35) est logé dans la commande au pied (2) et, d'autre part, par le fait que l'élément de commande (36) peut être actionné de l'extérieur.

11. Dispositif selon la revendication 9 ou 10, caractérisé par le fait que le dispositif d'arrêt d'urgence (35) et le mécanisme de commutation (19) sont logés dans un boîtier commun (3), le dispositif d'arrêt d'urgence (35) étant situé, de préférence, au-dessus du mécanisme de commutation (19).

12. Dispositif selon l'une des revendications 9 à 11, caractérisé par le fait que le dispositif d'arrêt d'urgence (35) est séparé de la pédale (23) par une paroi du boîtier (14).

13. Dispositif selon l'une des revendications 9 à 12, caractérisé par le fait que le dispositif d'arrêt d'urgence (35) et le mécanisme de commutation (19) se trouvent dans des compartiments séparés (17, 18) du boîtier (3).

14. Dispositif selon l'une des revendications 1 à 13, caractérisé par le fait que le dispositif d'arrêt d'urgence (35) et le système de blocage de la remise en marche (20) sont logés dans un compartiment commun (17) du boîtier (3).

Fig.1

Fig.2

0 054 912

# Fig.3

# Fig.4

0 054 912

# Fig.5

Fig.6

21 5 36 3 2

23

0 054 912

# Fig.7

# Fig.8

0 054 912

# Fig.9

# Fig.10